Europäisches Patentamt

European Patent Office

Office européen des brevets

(11) Veröffentlichungsnummer: **0 297 440**
**A1**

## (12) EUROPÄISCHE PATENTANMELDUNG

(21) Anmeldenummer: 88110058.0

(22) Anmeldetag: 24.06.88

(51) Int. Cl.⁴: **G11B 5/708 , G11B 5/70**

(30) Priorität: 01.07.87 DE 3721742

(43) Veröffentlichungstag der Anmeldung:
04.01.89 Patentblatt 89/01

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Schneider, Norbert**
**Madenburgstrasse 5f**
**D-6701 Altrip(DE)**
Erfinder: **Nowak, Uwe, Dr.**
**Wolfhartstrasse 14**
**D-6700 Ludwigshafen(DE)**
Erfinder: **Nickolay, Gerd**
**Steinbruchweg 4**
**D-6730 Neustadt(DE)**
Erfinder: **Klein, Ursula**
**Trifelsstrasse 33**
**D-6704 Mutterstadt(DE)**
Erfinder: **Lenz, Werner, Dr.**
**Heinrich-Baermann-Strasse 14**
**D-6702 Bad Duerkheim(DE)**
Erfinder: **Jakusch, Helmut, Dr.**
**Lorscher Ring 6c**
**D-6710 Frankenthal(DE)**
Erfinder: **Koch, Volker, Dr.**
**Am Hipperling 3**
**D-6719 Battenberg(DE)**
Erfinder: **Domas, Friedrich**
**Hasenweg 4**
**D-6822 Altlussheim(DE)**

(54) **Scheibenförmiger magnetischer Aufzeichnungsträger.**

(57) Die Erfindung betrifft scheibenförmige magnetische Aufzeichnungsträger, bestehend aus einem nichtmagnetischen Trägermaterial und einer darauf mindestens einseitig aufgebrachten Magnetschicht im wesentlichen bestehend aus einem in einer organischen Bindemittelmatrix feinverteilten magnetischen Material, weiteren Zusatzstoffe sowie eines hochporösen Pigments und einer auf der Oberfläche der Magnetschicht befindlichen reibungsmindernden Substanz.

## Scheibenförmiger magnetischer Aufzeichnungsträger

Die Erfindung betrifft scheibenförmige magnetische Aufzeichnungsträger, bestehend aus einem nichtmagnetischen Trägermaterial und einer darauf mindestens einseitig aufgebrachten Magnetschicht im wesentlichen bestehend aus einer organischen Bindemittelmatrix, feinverteilem magnetischen Material sowie weiterer Zusatzstoffe und einer auf der Oberfläche der Magnetschicht befindlichen reibungsmindernden Substanz.

Die magnetischen Schichten üblicher magnetischer Aufzeichnungsträger bestehen aus in polymeren organischen Bindemitteln feinverteilten magnetischen Materialien, vorwiegend auf der Basis von Eisenoxiden. Aufzeichnungsträger mit solchen Schichten auf scheibenförmigen Trägermaterialien werden in sogenannten Plattenlaufwerken in der Datentechnik eingesetzt. Hierbei fliegen die zur Aufzeichnung und Wiedergabe verwendeten Magnetköpfe in einem Abstand von bis zu 0,2 bis 0,3 $\mu$m über der Oberfläche der mit hoher Umdrehungszahl rotierenden scheibenförmigen Aufzeichnungsträger, da sich durch die hohe Relativgeschwindigkeit und die spezielle Kopfform ein Luftpolster zwischen Kopf und Platte bildet, wodurch der Kopf getragen wird. Vor Inbetriebnahme des Gerätes sitzt der Magnetkopf unmittelbar auf der Magnetplatte auf. Ebenso entsteht ein Kopf-Platte-Kontakt nach dem Abschalten des Gerätes. Die Plattenoberfläche muß deshalb so beschaffen sein, daß sie einer großen Anzahl solcher Kopf-Platte-Kontakte ohne Beschädigung standhält. Bei einer für derartige Aufzeichnungsträger geforderten Lebensdauer von mindestens 10 Jahren entspricht dies einer Beanspruchung von 20 000 bis 30 000 Lande- und Startvorgängen des Magnetkopfes auf einer Aufzeichnungsspur. Damit wird deutlich, daß außergewöhnliche Anforderungen an die Magnetschicht hinsichtlich Reibung und Verschleißfestigkeit gestellt werden.

Dies bedeutet, daß die Oberfläche der Magnetschicht eine hervorragende Abriebfestigkeit und Gleitfähigkeit aufweisen muß. Es is bekannt, magnetische Aufzeichnungsträger zur Verminderung der Reibung zwischen Magnetschicht und Geräteteilen und damit verbunden auch zur Verminderung von Schichtabrieb und Verlängerung der Lebensdauer gewisse Mengen eines Gleitmittels zuzusetzen. Als geeignete Gleitmittel sind für diesen Zweck bereits eine große Anzahl verschiedener Gleitmittel unterschiedlicher chemischer Natur und Konsistenz, wie Polydimethylsiloxane, Paraffinöle, Wachse, gesättigte und ungesättigte Fettsäuren, Fettsäureester, Fettsäureamide, Salze von Fettsäuren, ferner feste Schmierstoffe, wie Molybdändisulfid, Graphit, Polytetrafluoräthylenpulver und Polytrichlorfluoräthylenpulver in der Literatur beschrieben.

Bei Zusatz von Schmierstoffen in Form feinverteilter, unlöslicher Feststoffe sind diese nicht im mikroskopischen Bereich gleichmäßig über die Oberfläche verteilt, sondern die Feststoffpartikel befinden sich nur an einigen Stellen der Oberfläche sowie in gleicher Konzentration im Inneren der Magnetschicht. Die zur Erlangung eines ausreichenden Schmiereffektes erforderliche Belegungsdichte der Oberfläche mit Gleitpartikeln setzt das Vorhandensein relativ großer Konzentrationen an Gleitmittel in der Magnetschicht voraus.

Es ist außerdem bekannt, daß flüssige Gleitmittel gegenüber festen im allgemeinen den Vorteil besitzen, die zu schmierenden Oberflächen mit einem homogenen äußerst dünnen, wenige Moleküllagen umfassenden Oberflächenfilm zu bedecken, wobei die mengenmäßige Zugabe an Gleitmittel sehr gering gehalten werden kann. Einen weiteren Vorteil bieten flüssige Gleitmittel bei magnetischen Aufzeichnungsträgern, die oftmaliger Benutzung und starker Beanspruchung ausgesetzt sind, durch die Möglichkeit der Nachbildung des Oberflächengleitfilms. Dies geschieht durch Diffusion des Gleitmittels aus dem Inneren der Magnetschicht. Auch ist das Aufbringen von dünnen Schutz-und insbesondere von Gleitschichten nur auf der Oberfläche von Magnetschichten beschrieben. Solche Gleitschichten werden schon seit langem bei starren magnetischen Aufzeichnungsplatten durch den Auftrag von flüssigen Oligomeren mittels Tauchen oder Aufschleudern hergestellt. Damit läßt sich sowohl der Verschleiß reduzieren als auch die statische und dynamische Reibung des Magnetkopfes auf der Plattenoberfläche erniedrigen. Ein solches Vorgehen wird u.a. in der US-A 778 308 angegeben, wonach sich insbesondere Perfluorpolyether dafür eignen sollen. Nachteilig an diesem Verfahren ist jedoch, daß das auf der Oberfläche vorhandene Schmiermittel unter dem Einfluß der Zentrifugalkraft und der Luftströmung beim Betrieb der Aufzeichnungsplatten zunehmend von innen nach außen wandert, so daß unter Abnahme der Schmierfähigkeit der Verschleiß und die Reibung sich gegenseitig beeinflussend lawinenartig anwachsen. Eine zur Vermeidung dieses Nachteils vorgenommene Erhöhung der Gleitmittelmenge auf der Oberfläche führt jedoch zu einer erhöhten Haftung zwischen Kopf und Platte, dem sogenannten Sticking-Effekt.

Aufgabe der Erfindung war es daher, scheibenförmige magnetische Aufzeichnungsträger zur Verfügung zu stellen, welche stets eine für den Betrieb erforderliche Gleitmittelmenge auf der Oberfläche aufweisen ohne jedoch den Nachteil des Sticking-Effekts zu zeigen.

Es wurde nun gefunden, daß scheibenförmige magnetische Aufzeichnungsträger, bestehend aus einem nicht-magnetischen Trägermaterial und einer darauf mindestens einseitig aufgebrachten Magnetschicht im wesentlichen be stehend aus einem in einer organischen Bindemittelmatrix feinverteilten magnetischen Material und weiterer Zusatzstoffe sowie einer auf der Oberfläche der Magnetschicht befindlichen reibungsmindernden Substanz, die aufgabengamäßen Anforderungen erfüllen, wenn die magnetische Schicht hochporöse Pigmente mit einer spezifischen Oberfläche, gemessen nach BET, von 300 bis 1000 $m^2/g$ in einer Menge von 1 bis 10, vorzugsweise 2 bis 6 Gew.%, bezogen auf das magnetische Material, enthält.

Die in den erfindungsgemäßen Aufzeichnungsträgern in der Magnetschicht enthaltenen Pigmente sind vorzugsweise Molekularsiebe auf der Basis von Metall-Aluminiumsilikaten, die eine besondere Kristallstruktur aufweisen. Das Netzwerk der Aluminiumoxid- und Siliciumoxidverbindungen ist so aufgebaut, daß relativ große Hohlräume entstehen. Die aus der dreidimensionalen netzförmigen Struktur der Molekularsiebe entstandenen Hohlräume können mit den verschiedensten Molekülen ausgefüllt werden. Sie werden in bekannter Weise durch Umsetzung wäßriger Natriumaluminat- und Natriumsilikatlösungen hergestellt.

In gleicher Weise geeignet sind hochporöse, synthetisch hergestellte amorphe Kieselsäuren mit eng definierter Teilchengrößenverteilung bei einer mittleren Teilchengröße von unter 10, vorzugsweise unter 5 μm.

Die BET-Methode zur Bestimmung der spezifischen Oberfläche ist eine Standardmethode. Eine ausführliche Beschreibung findet sich u.a. in "Adsorption, Surface Area and Porosity", S.J. Gregg and K.S.W. Sing, Academic Press, 1967, Kapitel 2. Die Pigmente gemäß vorliegender Erfindung werden gemäß DIN 66 132 mittels eines Ströhlein-Areameters der Firma Ströhlein, Düsseldorf, BRD nach dem Einpunkt-Differenzverfahren nach Haul und Dümbgen vermessen.

Zur Herstellung der erfindungsgemäßen magnetischen Aufzeichnungsträger werden die hochporösen Pigmente bei der bekannten Herstellung der die Magnetschicht bildenden Dispersion bei der Dispergierung der Komponenten zugesetzt oder aber in die fertige Dispersion mittels Schnellrührer eingearbeitet. Ansonsten entspricht sowohl das Herstellverfahren der magnetischen Aufzeichnungsträger einschließlich dem Aufbringen des Gleitmittels auf die Magnetschichtoberfläche dem bekannten Stand der Tecknik. Die Gleitmittel werden aus der Reihe der bekannten Perfluorpolyetherölgemischen ausgewählt.

Aufgrund des erfindungsgemäßen Gehalts an hochporösen Pigmenten in der Magnetschicht ist es möglich, ohne nachteilige Einflüsse auf die mechanischen Eigenschaften der Schicht, größere Mengen an aufgebrachtem Gleitmit tel zu speichern. Trotz dieser gesteigerten Menge an Gleitmittel tritt bei den erfindungsgemäßen Aufzeichnungsträgern kein Sticking auf. Der Reibungskoeffizient bleibt auch bei verdoppelter Gleitmittelmenge unterhalb der zulässigen Maximalwerte. Durch den erfindungsgemäßen Einbau des porösen Pigments in die Magnetschicht werden außerdem die Rauhigkeitswerte der Magnetschicht nicht verschlechtert.

Beispiel 1

In einer diskontinuierlich betriebenen Rührwerksmühle mit einem Inhalt von 250 Volumenteilen und gefüllt mit 170 Gew.teilen keramischen Mahlkörpern mit einem mittleren Durchmesser von 1 mm wurden 16,5 Gew.teile eines nadelförmigen Gamma-Eisen(III)oxids mit einer Koerzitivfeldstärke von 29 kA/m und einer spezifischen Oberfläche (nach BET) von 26 $m^2/g$, 1,0 Gew.teile eines feinteiligen Aluminiumoxids mit einer spezifischen Oberfläche (nach BET) von 15 $m^2/g$ sowie 1,0 Gew.teile einer synthetisch hergestellten Kieselsäure mit einer spezifischen Oberfläche (nach BET) von 850 $m^2/g$ in ein Bindemittel-Lösungsmittel-Gemisch, bestehend aus 10,8 Gew.teilen eines 60%igen handelsüblichen Epoxidharzes mit einem Epoxid-Äquivalentgewicht von 450 bis 550, gelöst in gleichen Teilen Toluol und Äthylglykolacetat, 3,8 Gew.teile eines Phenolharzes auf Allylesterbasis, 0,96 Gew.teile eines Melamin-Formaldehydkondensats sowie 13,6 Gew.-teile einer 7%igen Lösung eines Celluloseacetobutyrats mit einem Äquivalentgewicht von 1100 und einem Hydroxylanteil von 1,5%, gelöst in Cyclohexanon, eingebracht. Dieses Lackgemisch wurde verdünnt mit 24,1 Gew.-teilen Äthylglykol, 16,25 Gew.teilen Isophoron sowie 11.5 Gew.teilen Äthylglykolacetat. Als Dispergierhilfsmittel wurden 0,25 Gew.teile eines Diaminopropandioleats eingebracht.

Diese Mischung wurde 12 Std. dispergiert. Anschließend wurden 0,25 Teile Methylhexahydrophthalsäure als Katalysator zugegeben und weitere 0,5 Std. dispergiert. Die so hergestellte Dispersion wurde durch ein Feinfilter filtriert. Zur Herstellung der Magnetschicht wurde die filtrierte Dispersion nach dem in dem deutschen Patent 2 157 650 angegebenen Verfahren beidseitig auf in Schrägstellung rotierende eloxierte Aluminiumscheiben aufgetragen und durch Erhöhen der Umdrehungszahl der Scheibe auf ca. 1000 U/min die überschüssige Magnetdispersion abgeschleudert. Die Schichten wurden dann in einer Wärmezone bei 200 bis 220° C gehärtet und mit einer Diamantpulverpaste auf Polyvinylalkohol-Schwamm geschliffen und nachpoliert. Es resultieren Magnetschichten in einer Stärke von 1,1 μm mit sehr geringer

Oberflächenrauhigkeit.

Diese Platte wurde anschließend in bekannter Weise durch Eintauchen in eine 1%ige Lösung eines handelsüblichen perfluorierten Polyäthers in Trichlorfluoräthan oberflächlich mit dem Gleitmittel versehen. Die gegenüber der Standardausrüstung höheren Gleitmittelmengen wurden durch Variation der Konzentration der oben genannten Lösung und durch langsameres Herausziehen der Platte aus der Lösung eingestellt.

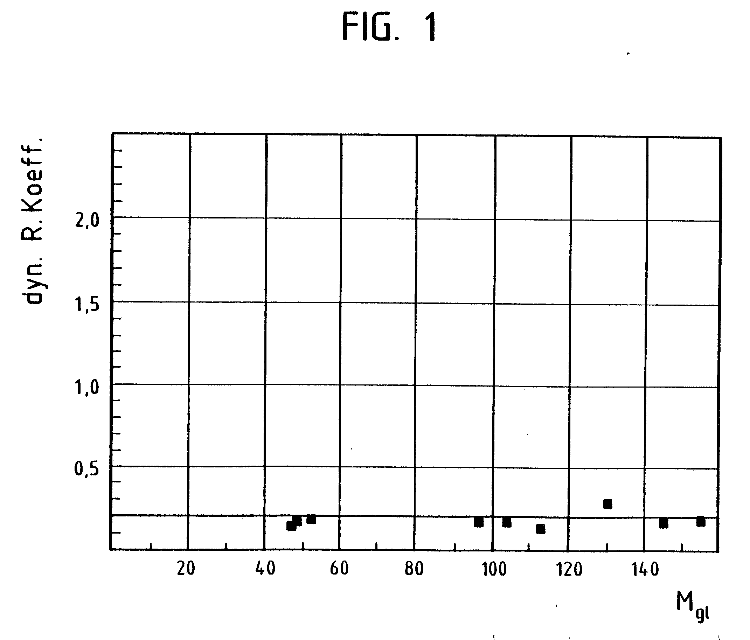

An der Magnetschicht dieses Aufzeichnungsträgers wurde die maximale Gleitmittelaufnahmefähigkeit bestimmt. Die maximale Gleitmittelaufnahmefähigkeit der Schichten wird durch die Grenzlubrizierung beschrieben. Die Grenzlubriziermenge ist die Gleitmittelmenge, bei der der dynamische Reibungskoeffizient über den zulässigen Maximalwert (0,2) stark ansteigt. Die Lubrikantmenge wird mittels FTIR-Spektroskopie ermittelt. Dieser Wert sowie die Meßwerte für die Oberflächenrauhigkeit, die gemittelte Rauhtiefe $R_z$ sowie den Mittenrauhwert $R_a$ nach DIN 4768 sind in der Tabelle angegeben. Der dynamische Reibungskoefizient (dyn. R. Koeff.) wurde mittels eines Reibungstesters entsprechend ECMA/TC16/82/4 Pkt 4.6 bzw. 4.9 bzw. ANSI X387 198544 v. 04.12.1984 Pkt. 4.7 bzw. 4.8 ermittelt. Figur 1 zeigt diesen Wert in Abhängigkeit von der Gleitmittelmenge $M_{Gl}$.

Beispiel 2

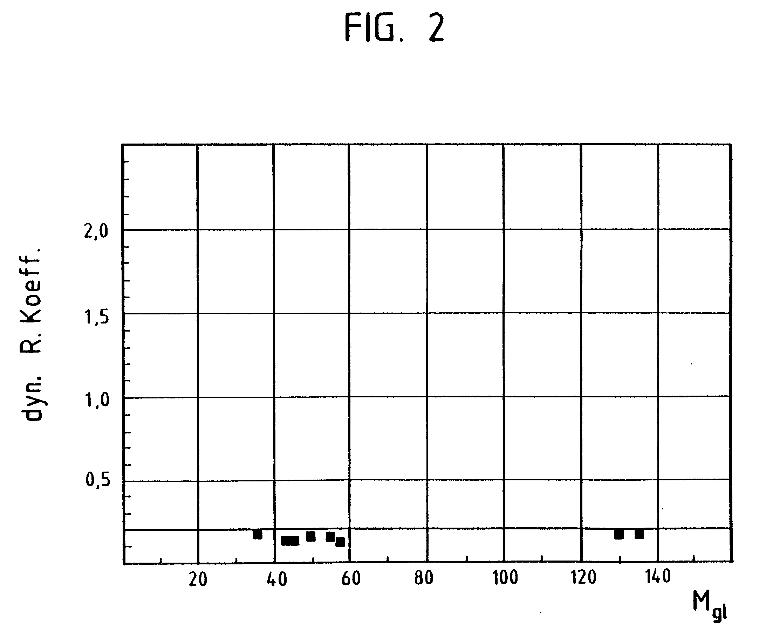

Es wurde wie in Beispiel 1 beschrieben verfahren, jedoch wurden anstelle synthetischer Kieselsäure die gleiche Menge eines Natrium-Aluminiumsilikat-Molekularsiebs mit einer spezifischen Oberfläche (nach BET) von 370 m²/g eingesetzt. Die Meßergebnisse sind in der Tabelle und in Figur 2 wiedergegeben.

Vergleichsversuch

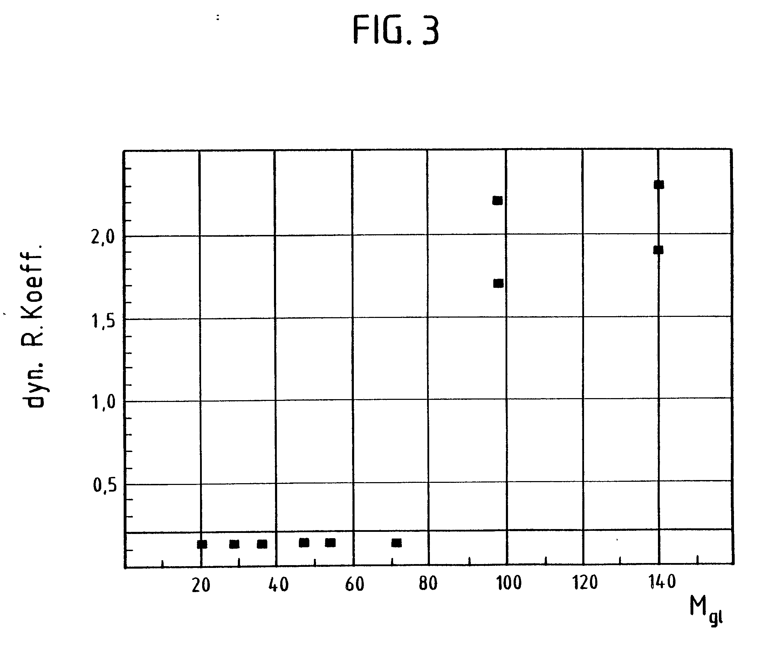

Es wurde wie in Beispiel 1 beschrieben verfahren, jedoch wurde kein hochporöses Pigment zugesetzt. Die Meßergebnisse sind in der Tabelle und in Figur 3 wiedergegeben.

**Tabelle**

|  | Grenzlubrizierung x 3,2 · $10^{-4}$ | $R_a$ [nm] | $R_z$ [nm] |
|---|---|---|---|
| Beispiel 1 | > 155 | 10,0 | 94 |
| Beispiel 2 | > 135 | 7,0 | 67 |
| Vergl.versuch | < 90 | 9,3 | 77 |

**Ansprüche**

Scheibenförmige magnetische Aufzeichnungsträger, bestehend aus einem nicht-magnetischen Trägermaterial und einer darauf mindestens einseitig aufgebrachten Magnetschicht im wesentlichen bestehend aus einem in einer organischen Bindemittelmatrix feinverteilten magnetischen Material und weiterer Zusatzstoffe sowie einer auf der Oberfläche der Magnetschicht befindlichen reibungsmindern den Substanz, dadurch gekennzeichnet, daß die magnetische Schicht hochporöse Pigmente mit einer spezifischen Oberfläche, gemessen nach BET, von 300 bis 1000 m²/g in einer Menge von 1 bis 10 Gew.%, bezogen auf das magnetische Material, enthält.

# FIG. 1

EP 0 297 440 A1

# FIG. 2

EP 0 297 440 A1

# FIG. 3

EP 0 297 440 A1

## EINSCHLÄGIGE DOKUMENTE

EP 88110058.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, unexamined applications, Sektion P, Band 9, Nr. 281, 8. November 1985 THE PATENT OFFICE JAPANESE GOVERNMENT Seite 166 P 403 * Kokai-Nr. 60-124 024 (HITACHI SEISAKUSHO K.K.) * | 1 | G 11 B 5/708 G 11 B 5/70 |
| P,X | EP - A2 - 0 257 599 (KONISHIROKU PHOTO INDUSTRY CO. LTD.) * Zusammenfassung * | 1 | |
| A | DE - A1 - 3 642 243 (TDK CORP.) * Zusammenfassung; Ansprüche 1-10 * | 1 | |

RECHERCHIERTE SACHGEBIETE (Int. Cl.4)

G 11 B 5/00

C 09 D 5/00

Der vorliegende Recherchenbericht wurde für alle Patentansprüche erstellt.

| Recherchenort | Abschlußdatum der Recherche | Prüfer |
|---|---|---|
| WIEN | 05-10-1988 | BERGER |